# EUROPEAN PATENT APPLICATION

(11) **EP 4 786 423 A1**
(43) Date of publication of application: **05.08.2026**
(21) Application number: 24872376.9
(22) Date of filing: 26.09.2024
(51) Int. Cl.: C02F 11/00, B09B 3/70, B09B 5/00, C05F 3/04, C05G 5/10, C05G 5/12, C05G 5/20, B09B 101/67

(54) **SOLID STARTING MATERIAL PRODUCTION METHOD**

(30) Priority: 28.09.2023 JP 2023167757
(71) Applicant: Sams Inc., Matsudo-shi, Chiba 270-2214 (JP)
(72) Inventor: SAKATA, Isamu, Matsudo-shi, Chiba 270-2214 (JP); OKANO, Masami, Matsudo-shi, Chiba 270-2214 (JP); KAMOSAWA, Takurou, Matsudo-shi, Chiba 270-2214 (JP); SAKATA, Kanji, Matsudo-shi, Chiba 270-2214 (JP); SAKATA, Mitsuko, Matsudo-shi, Chiba 270-2214 (JP)
(74) Representative: Plasseraud IP
(86) International application number: PCT/JP2024/034394
(87) International publication number: WO 2025/070591

(57) **Abstract**

Object

The present invention provides a method for manufacturing a solid raw material, which can effectively utilize a waste liquid after used disposable diapers are decomposed and treated and recycling resources are recovered, and can easily produce a solid raw material from the waste liquid.

Solution

A method for manufacturing a solid raw material according to an embodiment of the present invention includes a separation step 1 of agitating a used disposable diaper with a treatment liquid by a separator 9 and decomposing and treating the used disposable diaper into members constituting the disposable diaper, a sorting step 2 of sorting a pulp and a plastic of solid components separated in the separation step 1 in a sorter 10, a first pulp recovery step 4 of recovering the pulp 8 from a waste liquid 3 that is a liquid component separated in the separation step 1, a dewatering step 6 of separating a solid component from a liquid component in a second waste liquid 5 after the pulp 8 is recovered in the first pulp recovery step 4, and a drying step 7 of drying the solid component separated from the second waste liquid 5 in the dewatering step 6.

## Description

### Technical Field

The present invention relates to a method for manufacturing a solid raw material for manufacturing a raw material of solid fertilizer or solid fuel from solid components contained in a waste liquid after decomposing and treating a used disposable diaper.

### Background Art

In October 2022, the government announced a policy to promote the domestic production of chemical fertilizers by focusing on the initiative to utilize sludge generated during the sewage treatment process as fertilizer, in order to avoid management pressure on farmers and a rise in food prices caused by an increase in chemical raw materials. In addition, the government formulated a policy to utilize sewage sludge as fertilizer for agriculture, and announced a policy to encourage the national and local governments to use sewage sludge as fertilizer, thereby reducing dependence on chemical fertilizer raw materials imported from foreign countries.

Furthermore, in July 2022, the GX Implementation Council chaired by the Prime Minister was held to discuss necessary measures in order to shift the fossil fuel-based economy, society, and industrial structure established since the Industrial Revolution to a clean energy-based system and to transform the entire economic and social system, i.e., Green Transformation (GX).

At the council, the roles of interested parties and the direction of efforts toward expanding the use of sewage sludge resources as fertilizer were presented, and it was indicated that, aiming for the domestic production and stable supply of fertilizer and the establishment of a resource-recycling society, the Ministry of Agriculture, Forestry and Fisheries, the Ministry of Land, Infrastructure, Transport and Tourism, and interested parties in the agricultural and sewage sectors would collaborate, while ensuring safety and quality and promoting understanding among consumers, with all interested parties actively working together with full effort to significantly expand the use of sewage sludge resources as fertilizer.

On the other hand, Patent Document 1 proposes that used disposable diapers, after disposable diapers which have been widely used in recent years have been used, be decomposed and treated to recover materials constituting the disposable diapers as recycling resources (pulp, plastic, and the like). Feces and urine discharged from the human body are attached to the used disposable diapers, in addition to the materials constituting the disposable diapers, so the waste liquid after the used disposable diapers are decomposed and treated by a treatment liquid contains the feces and urine.

The waste liquid after the used disposable diapers are decomposed and treated by the treatment liquid and recycling resources are recovered is finally discharged to sewerage after sewage treatment, treated in a sewage treatment plant, and then released to nature such as rivers and seas.

Incidentally, the waste liquid after used disposable diapers are decomposed and treated and recycling resources are recovered contains feces and urine discharged from the human body, and the feces and urine contain beneficial nutrients for soil (nitrogen, phosphoric acid, and potassium). The solid components (scum) extracted from the waste liquid are compressed and molded to become a raw material of solid fuel.

Therefore, Patent Document 2 discloses that used disposable diapers are finely crushed by a crusher and then mixed with water in a water mixing tank, and suspended solids (solid matter) suspended in a settling tank are used as a soil conditioner, a fertilizer, or the like. Then, the aqueous liquid from which the suspended solids have been removed is subjected to a sewage treatment and discharged to sewerage.

### Citation List

Patent Document 1: JP 2021-121699 A
Patent Document 2: JP 2004-25574 A

### Summary of Invention

### Technical Problem

However, in Patent Documents 1 and 2, although the waste liquid after the decomposition treatment of the used disposable diaper (the waste liquid after the recycling resources are recovered) contains the beneficial nutrients for the soil, this waste liquid is treated and wastefully discharged to sewerage and therefore is not effectively utilized.

The waste liquid discharged to the sewerage and sent to the sewage treatment plant is mixed with other sewage sludge to become sewage sludge. When this sewage sludge is used as a fertilizer, it is necessary to disinfect or sterilize various germs and the like because the sewage sludge contains substances other than feces and urine discharged from the human body. Therefore, when the sewage sludge is used as a fertilizer, steps such as disinfection and sterilization are required, making it impossible to easily manufacture the sewage sludge as a fertilizer.

Therefore, an object of the present invention is to provide a method for manufacturing a solid raw material, which can effectively utilize a waste liquid after used disposable diapers are decomposed and treated and recycling resources are recovered, and can easily manufacture a solid raw material from the waste liquid.

### Solution to Problem

To solve the problems and to achieve the object, a first aspect of the present invention includes: a separation step (1) of agitating a used disposable diaper with a treatment liquid in a separator (9) without crushing the used disposable diaper and decomposing and treating the used disposable diaper into members constituting the used disposable diaper; a sorting step (2) of sorting a pulp (8) and a plastic (28) of solid components separated in the separation step (1) in a sorter (10); a pulp recovery step (4) of recovering the pulp (8) from a first waste liquid (3) that is a liquid component separated in the separation step (1); a dewatering step (6) of separating a solid component from a liquid component in a second waste liquid (5) after the pulp (8) is recovered in the pulp recovery step (4); a drying step (7) of drying the solid component separated from the second waste liquid (5) in the dewatering step (6); a solid raw material manufacturing step (16) of manufacturing a solid raw material (20) from the solid component dried in the drying step (7); and a liquid fertilizer manufacturing step (13) of producing a liquid fertilizer (14) from the liquid component separated from the second waste liquid (5) in the dewatering step (6), mixing moisture separated from a solid sludge component in the drying step (7) with the liquid component separated from the second waste liquid (5), and producing the liquid fertilizer (14).

In a second aspect of the present invention, any one of a powder fertilizer (17), a granular fertilizer (19), and a solid fuel raw material (26) is manufactured in the solid raw material manufacturing step (16).

In a third aspect of the present invention, the solid raw material (20) is produced by drying the solid component by any one of vacuum drying, freeze drying, and vacuum freeze drying in the drying step (7).

### Advantageous Effects of Invention

The present invention allows the solid raw material to be produced by decomposing and treating the used disposable diaper in the separation step, sorting the pulp and the plastic of the solid components separated in the separation step in the sorting step, in the pulp recovery step, recovering the pulp from the waste liquid that is the liquid component separated in the separation step, separating the solid component from the liquid component in the waste liquid after the pulp is recovered in the pulp recovery step in the dewatering step, and in the drying step, drying the solid component separated from the waste liquid in the dewatering step. This can effectively utilize the waste liquid after the used disposable diaper is decomposed and treated and recycling resources are recovered and easily produce the solid raw material from the waste liquid.

### Brief Description of Drawings

FIG. 1 is a block diagram showing steps of a method for manufacturing a solid raw material according to an embodiment of the present invention.
FIG. 2 is a block diagram showing devices used in each step of the method for manufacturing a solid raw material according to the embodiment of the present invention.

### Description of Embodiments

Hereinafter, a method for manufacturing a solid raw material according to an embodiment of the present invention will be described with reference to the drawings. A used disposable diaper according to the present embodiment is material-recyclable and includes a liquid-permeable top sheet, a liquid-impermeable back sheet, an absorbent body disposed between the top sheet and the back sheet, and a plurality of elastic members for imparting stretchability. The plurality of elastic members, that is, the rubber that imparting stretchability to a gather portion, include a plurality of short elastic members each having a length of 10 mm or longer and 200 mm or shorter in a nonstretched state. The elastic member is a solid component separated in a separation step 1 described below, and becomes a solid raw material after being recovered together with solid components of pulp and plastic. A hot melt adhesive used for the used disposable diaper according to the present embodiment includes a softening point hot melt adhesive with a softening point of 60°C or higher and 90°C or lower. Furthermore, the absorbent body used for the used disposable diaper according to the present embodiment contains a biodegradable superabsorbent polymer.

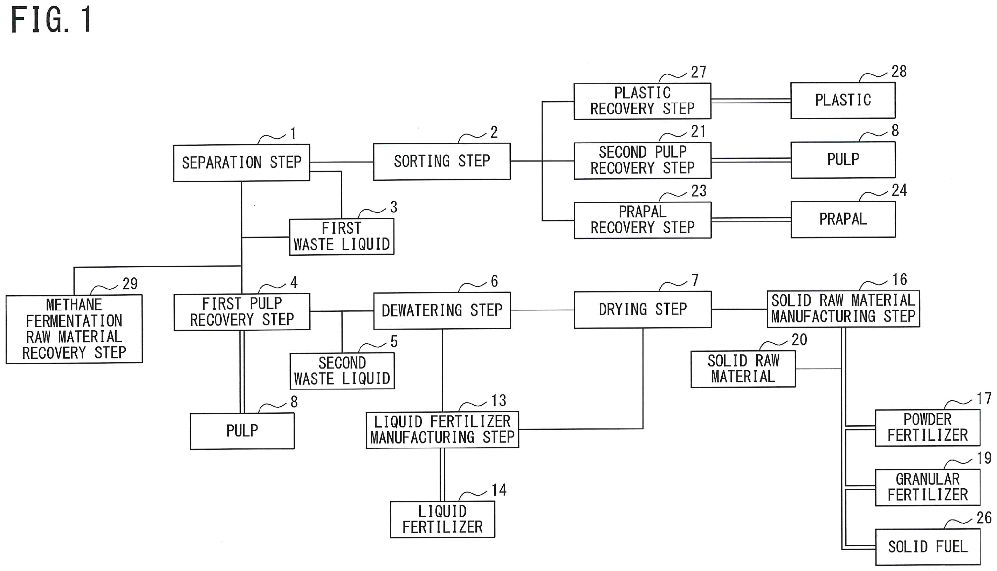

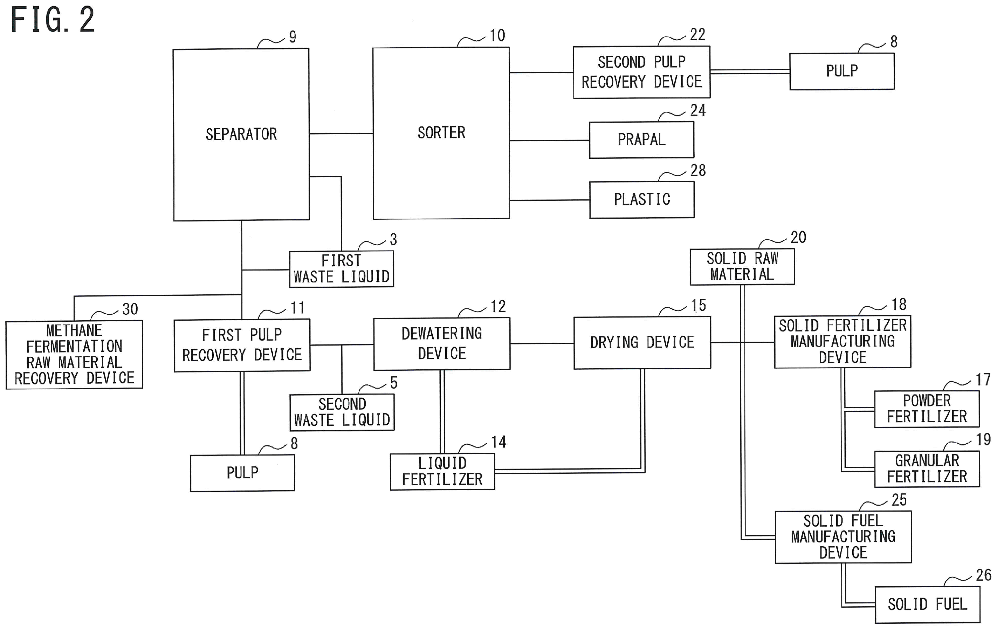

As shown in FIGS. 1 and 2, a method for manufacturing a solid raw material according to the present embodiment includes a separation step 1 of agitating the used disposable diaper with a treatment liquid by a separator 9 to decompose and treat the used disposable diaper into members constituting the disposable diaper, a sorting step 2 of sorting a pulp and a plastic of solid components separated in the separation step 1 by a sorter 10, a first pulp recovery step 4 of recovering a pulp 8 from a waste liquid 3 that is a liquid component separated in the separation step 1, a dewatering step 6 of separating a solid component and a liquid component in a waste liquid 5 after the pulp 8 is recovered in the first pulp recovery step 4, and a drying step 7 of drying the solid component separated from the waste liquid 5 in the dewatering step 6.

The separator 9 used in the separation step 1 includes an outer drum separation tank fixed to a housing and an inner drum separation tank having a large number of small holes formed on an outer peripheral surface thereof and rotatably supported in the outer drum separation tank. The used disposable diaper and the treatment liquid are introduced into the inner drum separation tank, and the used disposable diaper is agitated together with the treatment liquid by rotation of the inner drum separation tank and decomposed and treated into materials constituting the disposable diaper. The used disposable diaper is decomposed and treated into a pulp, a plastic, and other materials in the inner drum separation tank, and most of the pulp is mixed in the treatment liquid.

When the treatment liquid is discharged from the inner drum separation tank, a plastic 28, a prapal 24 with a small amount of pulp attached, and other materials remain as solid matters in the inner drum separation tank. The pulp 8 is recovered from the treatment liquid discharged from the inner drum separation tank (hereinafter referred to as "first waste liquid 3") by a first pulp recovery device 11.

The first waste liquid 3 discharged from the inner drum separation tank, in addition to the pulp 8 being recovered from the first waste liquid by the first pulp recovery device 11, is also recovered by a methane fermentation raw material recovery device 30 in a methane fermentation raw material recovery step 29 and used as a methane fermentation raw material. The first waste liquid 3 discharged from the inner drum separation tank can be returned to the inner drum separation tank and used again as part of the treatment liquid for used disposable diapers. In this case, by repeatedly using the first waste liquid 3 discharged from the inner drum separation tank as part of the treatment liquid, a concentration of sludge components contained in the first waste liquid 3 increases, making it a suitable methane fermentation raw material.

Sludge components are mixed in the waste liquid after the pulp 8 is recovered from the first waste liquid 3 (hereinafter referred to as "second waste liquid 5"). The second waste liquid 5 is dewatered by a dewatering device 12 in a dewatering step 6 and separated into a solid sludge component (scum) and a liquid portion. The liquid component separated from the second waste liquid 5 by the dewatering device 12 becomes a liquid fertilizer 14 in a liquid fertilizer manufacturing step 13, and the solid sludge component is dried by a drying device 15 in a drying step 7. In this case, even if dewatered by the dewatering device 12, the solid sludge component contains a small amount of moisture, and the amount of contained moisture is reduced as much as possible by the drying device 15.

The drying device 15 can use vacuum drying, freeze vacuum drying, freeze drying, heating drying by a heater, or the like. A solid raw material 20 is produced from the solid sludge component (scum) dried by the drying device 15 in a solid raw material manufacturing step 16. The solid raw material 20 is crushed into powder to manufacture a powder fertilizer 17 and granulated to manufacture a granular fertilizer 19 by a solid fertilizer manufacturing device 18. The powder fertilizer 17 and the granular fertilizer 19 are sludge recovered from the used disposable diaper, are organic substances discharged from the human body, and contain nitrogen, phosphoric acid, potassium, and the like, which are beneficial nutrients for soil. Since the used disposable diaper is sterilized and disinfected when it is decomposed and treated, harmful fungi are killed.

The solid raw material 20 produced by the drying device 15 is mixed with the pulp, which has been recovered by the first pulp recovery device 11 and the like, and then compressed and molded by a solid fuel production device 25, resulting in production of a solid fuel raw material 26. The moisture separated from the solid sludge component by the drying device 15 is mixed with the moisture dewatered by the dewatering device 12 to become a raw material of the liquid fertilizer 14.

The plastic 28, the prapal 24 with a small amount of pulp attached, and other materials as the solid matters remaining in the inner drum separation tank of the separator 9 are sent to a sorter 10 in a sorting step 2. The sorter 10 includes an outer drum sorting tank fixed to a housing and an inner drum sorting tank having a large number of small holes formed on an outer peripheral surface thereof and rotatably supported in the outer drum sorting tank. The pulp, plastic, plastic with a small amount of pulp attached, and other materials remaining in the inner drum separation tank are introduced into the inner drum sorting tank.

Drying air is supplied into the outer drum sorting tank, and the drying air is blown against the pulp 8, the plastic 28, the prapal 24 with a small amount of pulp attached, and other materials in the inner drum sorting tank rotating in the outer drum sorting tank, resulting in sorting of the pulp 8, the plastic 28, the prapal 24, and other materials. The pulp 8 is mixed in the drying air supplied into the outer drum sorting tank and used to dry the pulp 8, the plastic 28, the prapal 24, and other materials, and this drying air is recovered by capturing the pulp 8 with a filter or the like by a second pulp recovery device 22 in a second pulp recovery step 21. The prapal 24 in the inner drum sorting tank is recovered in a prapal recovery step 23. The plastic 28 remaining in the outer drum sorting tank is recovered in a plastic recovery step 27.

Next, analysis results of the powder fertilizer 17 and the granular fertilizer 19 manufactured from the solid raw material manufactured by the method for manufacturing a solid raw material according to the present embodiment will be described.

**Table 1**

| | |
|---|---|
| Moisture | 15.40% |
| Total amount of nitrogen (N) | 1.08% |
| Total amount of phosphoric acid (P₂O₅) | 1.38% |
| Total amount of potassium (K₂O) | 0.06% |
| Total amount of lime (CaO) | 15.86% |
| Zinc (Zn) | 230 mg/kg |
| Copper (Cu) | 10 mg/kg |

As shown in Table 1, the powder fertilizer 17 and the granular fertilizer 19 manufactured from the solid raw material of the present embodiment contain lime, zinc, and copper, in addition to nitrogen, phosphoric acid, and potassium component. Lime is contained in the treatment liquid used for treating the used disposable diaper.

Harmful substances such as arsenic, cadmium, nickel, chromium, mercury, and lead have levels equal to or lower than those defined by the Fertilizer Control Law and have no problem even if sprayed onto fields as fertilizers and released into the nature.

The powder fertilizer and granular fertilizer manufactured from the solid raw material contain lime and therefore have strong alkalinity, but they can be neutralized by mixing in a neutralizing agent. Since the powder fertilizer and granular fertilizer manufactured from the solid raw material contain lime, they can also be used as soil conditioners for neutralizing acidic soil.

As described above, according to the method for manufacturing a solid raw material of the present embodiment, since the second waste liquid 5 after the used disposable diaper is decomposed and treated and the recycling resources are recovered is not discharged to sewage or the like, the second waste liquid 5 can be effectively utilized and the solid raw material 20 can be easily produced from the waste liquid that has been conventionally discarded. On the other hand, since lime has strong alkalinity, it can be neutralized and used by mixing in a neutralizing agent.

Since the solid raw material 20 manufactured by the method for manufacturing a solid raw material according to the present embodiment is sterilized and disinfected when decomposing and treating the used disposable diaper, the solid raw material 20 does not contain fungi harmful to the human body and can be a raw material in a good hygienic state.

Since the solid raw material 20 according to the present embodiment is sludge attached to the used disposable diaper and is discharged from the human body, the solid raw material 20 does not contain any other sludge (feces and urine of livestock and other substances). Thus, the powder fertilizer, granular fertilizer and solid fuel manufactured from the solid raw material 20 are hygienic and do not harm the human body and environment. Even if it is burned as a solid fuel, it does not adversely affect the environment.

Further, according to the method for manufacturing a solid material of the present embodiment, in addition to decomposing and treating the used disposable diaper and recovering the pulp 8, the plastic 28, and the prapal 24, which are recycling resources, the second waste liquid 5 after treating the used disposable diaper is also separated into a solid component and a liquid component, the liquid component is used for the liquid fertilizer 14 and the solid component is used as the solid raw material 20 for the powder fertilizer 17, the granular fertilizer 19, and the solid fuel raw material 26. Thus, the used disposable diaper can be almost completely recycled.

As a result, since nothing is released to the nature after the used disposable diaper is treated, the natural environment is not adversely affected. In particular, in the method for manufacturing a solid raw material according to the present embodiment, since the used disposable diaper is not crushed, small plastic pieces (mircoplastics) are not generated, and there is no release of mircoplastics into the ocean.

In the present embodiment, returning the first waste liquid 3 into the inner drum separation tank and using it again as part of the treatment liquid for treating the used disposable diaper can make a good methane fermentation raw material. In this case, since the amount of pulp contained in the first waste liquid 3 is also increased by repeatedly using the first waste liquid 3 as the treatment liquid for treating the used disposable diaper, a larger amount of pulp can be recovered by the first pulp recovery device 11 in the first pulp recovery step 4.

In the present embodiment, for the used disposable diaper treated by the separator 9, the elastic member (rubber) used in the gather portion is a short elastic member with a length of 10 mm or longer and 200 mm or shorter, the hot melt adhesive is a softening point hot melt adhesive with a softening point of 60°C or higher and 90°C or lower, and the absorbent body is a biodegradable superabsorbent polymer, making it easier to perform the decomposition treatment and enabling material recycling.

While the embodiments of the present invention have been disclosed, it will be apparent to those skilled in the art that modifications may be made without departing from the scope of the present invention. All such modifications and equivalents are intended to be included in the following claims.

### Industrial Applicability

The method for manufacturing a solid raw material according to the present invention is not limited to a method for manufacturing a solid raw material from a used disposable diaper, and can be used for decomposing and treating a urine absorbing pad or other sanitary articles and manufacturing a solid raw material from the urine absorbing pad or other sanitary articles.

### Reference Signs List

1 Separation step
2 Sorting step
3 First waste liquid
4 First pulp recovery step
5 Second waste liquid
6 Dewatering step
7 Drying step
8 Pulp
9 Separator

## Claims

1. A method for manufacturing a solid raw material, the method comprising:
a separation step (1) of agitating a used disposable diaper with a treatment liquid in a separator (9) without crushing the used disposable diaper and decomposing and treating the used disposable diaper into members constituting the used disposable diaper;
a sorting step (2) of sorting a pulp (8) and a plastic (28) of solid components separated in the separation step (1) in a sorter (10);
a pulp recovery step (4) of recovering the pulp (8) from a first waste liquid (3) that is a liquid component separated in the separation step (1);
a dewatering step (6) of separating a solid component from a liquid component in a second waste liquid (5) after the pulp (8) is recovered in the pulp recovery step (4);
a drying step (7) of drying the solid component separated from the second waste liquid (5) in the dewatering step (6);
a solid raw material manufacturing step (16) of manufacturing a solid raw material (20) from the solid component dried in the drying step (7); and
a liquid fertilizer manufacturing step (13) of producing a liquid fertilizer (14) from the liquid component separated from the second waste liquid (5) in the dewatering step (6), mixing moisture separated from a solid sludge component in the drying step (7) with the liquid component separated from the second waste liquid (5), and producing the liquid fertilizer (14).

2. The method according to claim 1, wherein in the solid raw material manufacturing step (16), any one of a powder fertilizer (17), a granular fertilizer (19), and a solid fuel raw material (26) is manufactured.

3. The method for manufacturing a raw material according to claim 1 or 2, wherein in the drying step (7), the solid raw material (20) is produced by drying the solid component with any one of vacuum drying, freeze drying, and vacuum freeze drying.
